# EUROPÄISCHE PATENTSCHRIFT

(11) **EP 1 678 013 B1**
(45) Veröffentlichungstag und Bekanntmachung des Hinweises auf die Patenterteilung: **27.02.2008**
(21) Anmeldenummer: 04789945.5
(22) Anmeldetag: 08.10.2004
(51) Int. Cl.: B60R 21/0132

(54) **VORRICHTUNG ZUR AUSLÖSUNG EINES SICHERHEITSSYSTEMS IN EINEM FAHRZEUG**
DEVICE FOR ACTIVATING A SECURITY SYSTEM IN A VEHICLE
DISPOSITIF POUR DECLENCHER UN SYSTEME DE SECURITE DANS UN VEHICULE

(30) Priorität: 09.10.2003 DE 10346871; 09.10.2003 DE 10346870; 09.10.2003 DE 10346868; 09.10.2003 DE 10346866; 09.10.2003 DE 10346864; 09.10.2003 DE 10346860; 09.10.2003 DE 10346869; 11.10.2003 DE 10347268; 11.10.2003 DE 10347270
(43) Veröffentlichungstag der Anmeldung: 12.07.2006
(73) Patentinhaber: Conti Temic microelectronic GmbH, 90411 Nürnberg (DE)
(72) Erfinder: HELLDÖRFER, Reinhard, 91083 Igelsdorf (DE); FENDT, Günter, 86529 Schrobenhausen (DE); WETZEL, Guido, 86633 Neuburg (DE); WEICHENBERGER, Lothar, 86669 Klingsmoos (DE)
(86) Internationale Anmeldenummer: PCT/DE2004/002236
(87) Internationale Veröffentlichungsnummer: WO 2005/035318

(56) Entgegenhaltungen:
- WO-A-00/41917
- DE-A1- 3 736 294
- DE-A1- 10 015 273
- DE-A1- 10 034 524
- DE-A1- 10 059 104
- DE-A1- 19 963 348

## Beschreibung

Die Erfindung betrifft eine Vorrichtung zur Auslösung eines Sicherheitssystems in einem Fahrzeug gemäss Anspruch 1 und ein entsprechendes Verfahren gemäß Anspruch 12.

Sicherheitssysteme in einem Fahrzeug benötigen eine Sensorik zur Erfassung der jeweiligen Fahr- beziehungsweise Unfallsituation, um entsprechend reagieren zu können. Es ist bekannt, Messwertaufnehmer zur Erfassung der Beschleunigung und des Körperschalls als Crashsensoren einzusetzen. Ein Aufprall auf ein Hindernis oder ein Zusammenstoss mit einem Hindernis wird durch die Auswertung der gemessenen Beschleunigung und des gemessenen Körperschalls erkannt, und entsprechende Sicherheitsmassnahmen werden durch das Sicherheitssystem eingeleitet. Um den Einsatz von Sicherheitssystemen wie Airbags, Gurtstraffern oder Fußgängerschutzsystemen zu verbessern, ist die Ermittlung des Ursprungs eines Aufpralls von wesentlicher Bedeutung.
Bisher bekannte Sensoren zur Erfassung des Körperschalls sind ausgebildet, um vorzugsweise transversale Körperschallwellen zu erfassen. Da ein einzelner dieser Sensoren nicht die Fortpflanzungsrichtung einer transversalen Körperschallwelle ermitteln kann, müssen zur Bestimmung des Ursprungsortes der Körperschallwelle mehrere Sensoren verknüpft werden und die gemessenen Körperschallwerte zum Teil mit großem Rechenaufwand ausgewertet werden.

Sensoren zur Erfassung der Beschleunigung und des Körperschalls haben einen weiteren entscheidenden Nachteil. Ihre Empfindlichkeitsrichtung zur Erfassung des Körperschalls ist oftmals nicht identisch mit der Empfindlichkeitsrichtung zur Erfassung der Beschleunigung. Deshalb müssen zur Bestimmung des Aufprallortes des Hindernisses häufig mehr als zwei Sensoren vorgesehen werden, um eine unfallgerechte Auslösung des Sicherheitssystems zu gewährleisten.

Aus der DE 100 15 273 A1, die die Merkmale des Oberbegriffs der Ansprüche 1 und 12 zeigt, ist eine Steuervorrichtung für ein Sicherheitssystem bekannt, bei der vier Sensoren zur Erfassung der Beschleunigung und auch des Körperschalls vorgesehen sind, die derart angeordnet sind, dass jeder Sensor eine andere Empfindlichkeitsrichtung aufweist. Auf diese Weise ist es nicht nur möglich, die Richtung der Beschleunigung zu ermitteln, sondern auch Störungen in den Sensoren zu ermitteln.

Aufgabe der vorliegenden Erfindung ist es, eine Vorrichtung und ein Verfahren zur Auslösung eines Sicherheitssystems in einem Fahrzeug vorzuschlagen, das für eine Erfassung von Beschleunigung und Körperschall geeignet ist.

Diese Aufgabe wird durch eine Vorrichtung zur Auslösung eines Sicherheitssystems in einem Fahrzeug mit den Merkmalen von Anspruch 1 und ein entsprechendes Verfahren mit den Merkmalen von Anspruch 12 gelöst. Bevorzugte Ausgestaltungen der Erfindung ergeben sich aus den abhängigen Ansprüchen.

Ein wesentlicher Gedanke der Erfindung besteht darin, eine geeignete Anordnung von Fahrzeugsensoren, die sowohl eine Beschleunigung als auch Schwingungsanteile einer Körperschallwelle aufnehmen können, für das jeweilige Sicherheitssystem zu wählen, wobei die Empfindlichkeitsrichtung zur Erfassung einer Beschleunigung und die Empfindlichkeitsrichtung zur Erfassung von Körperschall durch Änderungen im Aufbau und Anbringung des Fahrzeugsensors unterschiedlich oder gleich ausgerichtet sind. Damit kann die erforderliche Anzahl von Fahrzeugsensoren, die zur Bestimmung beispielsweise des Aufprallorts bei einem Crash erforderlich sind, minimiert werden.
Die Erfindung betrifft nun eine Vorrichtung zur Auslösung eines Sicherheitssystems in einem Fahrzeug mit mindestens einem Fahrzeugsensor, der Schwingungen in Frequenzbereichen erfassen kann, die sowohl durch eine Beschleunigung als auch durch Körperschall verursacht werden und mindestens einen Messwertaufnehmer zum Erfassen von Schwingungen umfasst, und einer Zentraleinheit, die Signale des mindestens einen Fahrzeugsensors auswertet und davon abhängig das Sicherheitssystems auslöst. Der mindestens eine Fahrzeugsensor weist dabei eine erste Empfindlichkeitsrichtung des mindestens einen Messwertaufnehmers zur Erfassung der Beschleunigung und eine zweite Empfindlichkeitsrichtung des mindestens einen Messwertaufnehmers zur Erfassung des Körperschalls auf. Damit kann die Beschleunigung und der Körperschall in gleichen oder unterschiedlichen Empfindlichkeitsrichtungen erfasst werden. Damit kann der Fahrzeugsensor in Bereichen eingesetzt werden, wo die Empfindlichkeitsrichtungen zur Erfassung der Beschleunigung und des Körperschalls gleich sein müssen, beispielsweise zur Auslösung eines Insassenschutzsystems. Ebenso ist ein Einsatz in Bereichen möglich, wo unterschiedliche Empfindlichkeitsrichtungen zur Erfassung der Beschleunigung und des Körperschalls gefordert sind, beispielsweise um eine Signalplausibilisierung eines Auslösesignals für ein Insassenschutzsystem durchzuführen. Weiterhin ist ein Einsatz in Diagnosesystemen eines Fahrzeugs möglich, wo eine Schwingungsanalyse bestimmter Fahrzeugelemente erforderlich ist.

Vorzugsweise umfasst die Vorrichtung mindestens einen zweiten Fahrzeugsensor, der Signale an die Zentraleinheit liefert. Mit zwei Fahrzeugsensoren kann bereits eine beispielsweise aus Fahrzeugquerachse und -längsachse gebildete Ebene hinsichtlich Beschleunigung und Körperschall, insbesondere longitudinalem Körperschall, überwacht werden.

Insbesondere können die erste Empfindlichkeitsrichtung und die zweite Empfindlichkeitsrichtung des Fahrzeugsensors nahezu gleich sein.
Damit kann ein Fahrzeugsensor sowohl die Beschleunigung als auch den Körperschall in einer gemeinsamen Ausbreitungsrichtung erfassen.

Weiterhin können eine aus der ersten und zweiten Empfindlichkeitsrichtung des ersten Fahrzeugsensors resultierende Empfindlichkeitsrichtung des ersten Fahrzeugsensors und eine aus der ersten und zweiten Empfindlichkeitsrichtung des mindestens einen zweiten Fahrzeugsensors resultierende Empfindlichkeitsrichtung des mindestens einen zweiten Fahrzeugsensors in einem vorgegebenen Winkel zueinander ausgerichtet sein. Beispielsweise zur Crasherkennung müssen oftmals mehrere Richtungen in einer Ebene oder in einem Raum hinsichtlich crashrelevanter Änderungen der Beschleunigungen oder des Körperschalls überwacht werden.

Der erste und der zweite Fahrzeugsensor können derart angeordnet sein, dass der vorgegebene Winkel nahezu Null ist.

Um beispielsweise mit zwei Fahrzeugsensoren eine aus Fahrzeugquerachse und -längsachse gebildete Ebene hinsichtlich Beschleunigung und Körperschall zu überwachen, sind der erste und der mindestens eine zweite Fahrzeugsensor derart angeordnet, dass der vorgegebene Winkel nahezu 90 Grad ist, wobei die erste und die zweite Empfindlichkeitsrichtung der jeweiligen Fahrzeugsensoren nicht mehr als 20 Grad voneinander abweichen.

Weiterhin können die erste Empfindlichkeitsrichtung und die zweite Empfindlichkeitsrichtung des jeweiligen Fahrzeugsensors in einem Winkel von nahezu 90 Grad zueinander ausgerichtet sein. Voneinander abweichende Empfindlichkeitsrichtungen sind beispielsweise dann erforderlich, wenn eine Plausibilisierung eines Auslösesignals für ein Sicherheitssystem in einem Fahrzeug, das auf Grundlage eines ersten Fahrzeugsensors ermittelt worden ist, mit einem Plausibilisierungssignal, das von einem zweiten Fahrzeugsensor erzeugt worden ist, durchgeführt wird. Dabei können die Fahrzeugsensoren beispielsweise derart angeordnet sein, dass die erste Empfindlichkeitsrichtung des ersten Fahrzeugsensors mit der zweiten Empfindlichkeitsrichtung des zweiten Fahrzeugsensors übereinstimmt und umgekehrt. Ein aus der Beschleunigung des ersten Fahrzeugsensors ermitteltes Auslösesignal wird damit mit einem aus dem Körperschall des zweiten Fahrzeugsensors ermittelten Plausibilisierungssignal verknüpft und umgekehrt.

Deshalb können der erste und der mindestens eine zweite Fahrzeugsensor derart angeordnet sein, dass die erste Empfindlichkeitsrichtung des ersten Fahrzeugsensors und die zweite Empfindlichkeitsrichtung des mindestens eine zweiten Fahrzeugsensors nahezu gleich sind und umgekehrt. Mit einer Anordnung in dieser Form, wobei sich die erste und die zweite Empfindlichkeitsrichtung der jeweiligen Fahrzeugsensoren um 90° unterscheiden, kann nicht nur eine aus Fahrzeugquerachse und -längsachse gebildete Ebene hinsichtlich Beschleunigung und Körperschall überwacht werden, sondern auch die bereits erwähnte Signalplausibilisierung des aus der erfassten Beschleunigung und des erfassten Körperschalls erzeugten Auslösesignals für ein Sicherheitssystem in einem Fahrzeug durchgeführt werden. Beispielsweise kann der die Beschleunigung wiedergebende Signalanteil eines ersten Fahrzeugsensors mit dem den Körperschall wiedergebenden Signalanteil eines zweiten Fahrzeugsensors verknüpft werden, um in einer Zentraleinheit ein plausibilisiertes Auslösesignal für ein Sicherheitssystem, insbesondere ein Insassenschutzsystem, zu erzeugen. Umgekehrt ist dieselbe Signalplausibilisierung mit dem die Beschleunigung wiedergebenden Signalanteil des zweiten Fahrzeugsensors und dem den Körperschall wiedergebenden Signalanteil des ersten Fahrzeugsensors möglich.

Vorzugsweise kann der mindestens eine Messwertaufnehmer den longitudinalen Körperschall erfassen. Der Vorteil der Erfassung und Auswertung longitudinaler Körperschallwellen im Vergleich zu transversalen Körperschallwellen liegt darin, dass eine Bestimmung des Ursprungsortes der longitudinalen Körperschallwelle und damit des Ursprungsortes des Zusammenstosses mit einem Hindernis möglich ist.

Insbesondere ist die Vorrichtung ausgebildet, um eine Signalplausibilisierung eines Signalanteils der Beschleunigung und/oder des Körperschalls des ersten Fahrzeugsensors mit einem Signalanteil der Beschleunigung und/oder des Körperschalls des mindestens einen zweiten Fahrzeugsensors durchzuführen. Es ist auch möglich, Signale weiterer Auslösesensoren zur Signalplausibilisierung heranzuziehen.

Ferner kann die Vorrichtung ausgebildet sein, um eine Signalplausibilisierung des Signalanteils der Beschleunigung des ersten Fahrzeugsensors mit dem Signalanteil des Körperschalls des ersten Fahrzeugsensors durchzuführen.

Außerdem kann die Vorrichtung ausgebildet sein, um eine Signalplausibilisierung des Signalanteils der Beschleunigung des mindestens einen zweiten Fahrzeugsensors mit dem Signalanteil des Körperschalls des mindestens einen zweiten Fahrzeugsensors durchzuführen. Jeder Fahrzeugsensor führt damit eine Signalplausibilisierung der zwei Signalanteile untereinander durch, die technisch mit wenig Aufwand realisierbar ist.

Der Fahrzeugsensor kann weiterhin einen Träger zur Fixierung des Messwertaufnehmers an einem Fahrzeugelement, ein Sensorgehäuse, eine seismischen Masse zur Erfassung der Beschleunigung und eine Verarbeitungseinheit zur Verarbeitung von Messwertaufnehmersignalen umfassen, wobei der mindestens eine Messwertaufnehmer mittels einer Verbindung auf dem Träger angebracht ist.

Weiterhin kann der mindestens eine Messwertaufnehmer mittels einer kraftschlüssigen Verbindung auf dem Träger angebracht sein, die eine Erfassung der Beschleunigung und/oder des Körperschalls ermöglicht. Die kraftschlüssige Verbindung ist dabei derart ausgebildet, eine Übertragung beispielsweise des longitudinalen Körperschalls von einem Fahrzeugelement zum Messwertaufnehmer zu gewährleisten.

Insbesondere ist die Verbindung zur Anbringung des Messwertaufnehmers auf dem Träger ausgebildet, um die Aufnahme unerwünschter Signale durch den Messwertaufnehmer zu verringern oder zu verhindern. Da die longitudinalen Körperschallwellen im Vergleich zu den transversalen Körperschallwellen oder im Vergleich zur Beschleunigung geringere Amplituden aufweisen, ist es vorteilhaft, bereits bei der Verbindung zur Anbringung des Trägers eine Dämpfung unerwünschter Signale zu erreichen.

Eine kostengünstige Variante einer Verbindung zur Anbringung auf dem Träger ist beispielsweise eine Klebung.

Weiterhin ist der Träger ausgebildet, abhängig von seiner Bauart die Messeigenschaften des Fahrzeugsensors zu bestimmen. Ein derartiger Fahrzeugsensor kann während des Herstellungsprozesses oder durch eine Programmierung derart in seinen Messeigenschaften variiert werden, um variabel für verschiedene Zwecke einsetzbar zu sein. Damit können beispielsweise hohe Stückzahlen dieses Fahrzeugsensors bei niedrigen Preisen produziert werden.

Weiterhin ist der Träger ausgebildet, abhängig von seiner Bauart eine Erfassung der Beschleunigung und/oder des Körperschalls zu ermöglichen. Insbesondere ermöglicht er die Übertragung von Schwingungsanteilen des Körperschalls, beispielsweise des longitudinalen Körperschalls, in einer vorgegebenen Richtung, um diese dem Messwertaufnehmer zur Verfügung zu stellen. Dabei kann der Träger ein Trägerelement, beispielsweise zur Anbringung eines piezoelektrischen Aufnehmers als Messwertaufnehmer, umfassen. Der Träger kann andererseits auch eine mehrere Trägerelemente umfassende Konstruktion sein, wenn beispielsweise ein als ASIC ausgebildeter Messwertaufnehmer zum Bonden auf einem ersten Trägerelement aufgebracht wird, mit einer Molding Masse vergossen wird, und dann auf einer Leiterplatte als zweitem Trägerelement aufgebracht wird.

Um beispielsweise eine Messung longitudinaler Körperschallwellen, die eine vergleichsweise geringe Amplitude aufweisen, zu ermöglichen, ist es ebenfalls vorteilhaft, durch eine geeignete Konstruktion des Trägers unerwünschte Signale zu dämpfen. Deshalb ist der Träger ausgebildet ist, die Aufnahme unerwünschter Messkomponenten durch den Messwertaufnehmer zu verringern oder gar zu verhindern.

Sowohl der Träger als auch die Verbindung zur Anbringung des Messwertaufnehmers auf dem Träger sind ausgebildet, eine Erfassung des longitudinalen Körperschalls zu ermöglichen. Eine Erfassung des longitudinalen Körperschalls ist technisch aufwändiger, da der longitudinale Körperschall im Vergleich zum transversalen Körperschall geringere Amplituden aufweist. Da longitudinale Körperschallwellen im Vergleich zu transversalen Körperschallwellen jedoch eine Bestimmung des Ursprungsortes der longitudinalen Körperschallwelle und damit des Ursprungsortes des Zusammenstosses mit einem Hindernis ermöglichen, sind der Träger und die Verbindung zur Anbringung des Messwertaufnehmers auf dem Träger derart ausgebildet, eine Übertragung der Schwingungsanteile einer longitudinalen Körperschallwelle von einem Fahrzeugelement zum Messwertaufnehmer zu ermöglichen und dabei gleichzeitig unerwünschte Signale zu dämpfen.

Insbesondere ist der Träger ausgebildet, abhängig von seiner Bauart die erste und die zweite Empfindlichkeitsrichtung des Fahrzeugsensors zu bestimmen. Damit ist es möglich, je nach Einsatzort und Bestimmung des Fahrzeugsensors sowohl identische als auch unterschiedliche Empfindlichkeitsrichtungen für die Erfassung der Beschleunigung und des Körperschalls zu definieren.

Insbesondere ist der Träger ausgebildet ist, abhängig von seiner Krümmung eine erste Empfindlichkeitsrichtung des mindestens einen Messwertaufnehmers zur Erfassung der Beschleunigung und eine zweite Empfindlichkeitsrichtung des mindestens einen Messwertaufnehmers zur Erfassung des Körperschalls zu bestimmen. Ist der Messwertaufnehmer beispielsweise ein piezoelektrischer Aufnehmer, können die Empfindlichkeitsrichtungen durch eine Krümmung des Trägers derart ausgerichtet werden, dass sowohl gleiche als auch unterschiedliche Empfindlichkeitsrichtungen je nach Einsatzort und Bestimmung des Fahrzeugsensors eingestellt werden können.

Insbesondere können die Fahrzeugsensoren innerhalb der Fahrgastzelle oder in geschützten Hohlräumen des Fahrzeugs angebracht sein, wenn die Vorrichtung zur Auslösung eines Sicherheitssystems in einem Fahrzeug beispielsweise ein Insassenschutzsystem ist.

Ferner können die Fahrzeugsensoren innerhalb oder in unmittelbarer Umgebung der Zentraleinheit angebracht sein. Da die Fahrzeugsensoren neben der Beschleunigung auch den Körperschall erfassen, ist eine Anbringung nahe der Fahrzeugaußenhaut nicht unbedingt erforderlich, da sich die Körperschallwellen weitaus schneller im Fahrzeug ausbreiten als die durch Beschleunigungsänderungen erzeugten Schwingungen und ein Crash in einer zur Auslösung des Sicherheitssystems erforderlichen Zeit detektiert werden kann.

Bei der Anwendung der Fahrzeugsensoren in einer Vorrichtung zur Auslösung beispielsweise eines Fußgängerschutzsystems können die Fahrzeugsensoren beispielsweise im Abstand von ungefähr 20 Zentimetern zur Fahrzeugaußenhaut angebracht sein.

Wenn der Messwertaufnehmer beispielsweise als piezoelektrischer Aufnehmer oder als Dehnmessstreifen ausgebildet ist, kann die seismische Masse auf dem mindestens einen Messwertaufnehmer aufgeklebt sein.

Andererseits kann die seismische Masse als Teil des Messwertaufnehmers ausgebildet sein, wenn der Messwertaufnehmer beispielsweise ein mikromechanischer Aufnehmer ist.

Insbesondere kann der mindestens eine Messwertaufnehmer ausgebildet sein, um einen bestimmten Beschleunigungsbereich zu erfassen. Abhängig vom Einsatzort und -zweck des Fahrzeugsensors wird ein bestimmter Beschleunigungsbereich vorgegeben, der innerhalb von +/-1 g und von +/-1000g liegt. Wird der Fahrzeugsensor beispielsweise im Stoßstangenbereich des Fahrzeugs eingesetzt, sollte er Beschleunigungen in einem niedrigeren Bereich, die einem Zusammenstoss mit einem leichten Objekt entsprechen, und Beschleunigungen in einem höheren Bereich bis +/-1000g erfassen, die beispielsweise einem Zusammenstoss mit einem anderen Fahrzeug entsprechen.

Einerseits kann der mindestens eine Messwertaufnehmer ausgebildet sein, um eine Programmierung eines bestimmten Beschleunigungsbereichs zu ermöglichen. Damit ist beispielsweise eine kundenspezifische Einstellung eines bestimmten Beschleunigungsbereiches im Anschluss an die Fertigung des Fahrzeugsensors möglich.

Andererseits kann der mindestens eine Messwertaufnehmer ausgebildet sein, um während des Herstellungsprozesses des Fahrzeugsensors die Einstellung eines bestimmten Beschleunigungsbereichs zu ermöglichen. Damit kann bereits während der Fertigung des Fahrzeugsensors durch eine geeignete Wahl der Technologie bzw. des Aufbaus ein geeigneter Beschleunigungsbereich definiert werden.

Weiterhin kann die Verarbeitungseinheit ein Filter zum selektiven Erfassen der Beschleunigung und/oder des Körperschalls umfassen. Damit wird am Ausgang des Fahrzeugsensors ein Signal zur Verfügung gestellt, das die gewünschten Frequenzanteile der Beschleunigung und des Körperschalls liefert. Eine externe Signalfilterung ist nicht mehr erforderlich und verringert den Aufwand für die weitere Auswertung des Signals des Fahrzeugsensors.

Das Filter in der Verarbeitungseinheit kann programmierbar sein, um ein selektives Erfassen der Beschleunigung und/oder des Körperschalls zu ermöglichen. Damit kann eine kundenspezifische Programmierung der Filtercharakteristik vorgenommen werden, um vom Kunden für seine spezielle Anwendung benötigte Signalanteile selektieren zu können.

Das Filter in der Verarbeitungseinheit kann andererseits derart ausgebildet sein, dass es während des Herstellungsprozesses des Fahrzeugsensors einstellbar ist, um ein selektives Erfassen der Beschleunigung und/oder des Körperschalls zu ermöglichen. Damit kann bereits während der Fertigung des Fahrzeugsensors eine Auswahl der für eine spezielle Anwendung benötigten Signalanteile getroffen werden.

Insbesondere ist die Verarbeitungseinheit ausgebildet, um Messwertaufnehmersignale mit hoher Amplitude ohne Übersteuerung einer in der Verarbeitungseinheit angeordneten Verstärkerschaltung zu erfassen. Die Verstärkerschaltung muss derart ausgebildet sein, dass eine Erfassung und Verstärkung beispielsweise der Messwertaufnehmersignale des longitudinalen Körperschalls möglich ist, die niedrigere Amplituden im Vergleich zu denen des transversalen Körperschalls aufweisen, aber auch Messwertsignale der Beschleunigung oder des transversalen Körperschalls mit höheren Amplituden erfasst und verstärkt werden können.

Der mindestens eine Messwertaufnehmer kann ein piezoelektrischer Aufnehmer, ein Dehnmessstreifen, ein mikromechanischer Aufnehmer oder ein magnetorestriktiver Aufnehmer sein. Je nach Einsatzort des Fahrzeugsensors kann mit einer geeigneten Wahl des Messwertaufnehmers eine einfache und kostengünstige Implementierung des Fahrzeugsensors erreicht werden. Bei Anwendungen, in denen nahezu gleiche erste und zweite Empfindlichkeitsrichtungen der Fahrzeugsensoren erforderlich sind, ist beispielsweise die Anwendung eines mikromechanischen Aufnehmers vorteilhaft, der aufbaubedingt eine gleiche erste und zweite Empfindlichkeitsrichtung aufweist. Bei Anwendungen, in denen unterschiedliche Empfindlichkeitsrichtungen erforderlich sind, ist andererseits beispielsweise ein piezoelektrischer Aufnehmer vorteilhaft, bei dem durch eine Krümmung des Trägers die gewünschte unterschiedliche Ausrichtung der Empfindlichkeitsrichtungen erreicht wird.

Der Fahrzeugsensor kann als Molded ASIC oder als mechatronischer Fahrzeugsensor ausgebildet sein.

Weiterhin kann der Träger als für die Molding Technik geeignetes Lead Frame oder als für die Molding Technik geeigneter Mechatronik-Träger ausgebildet sein.

Dementsprechend kann das Sensorgehäuse als eine den Träger umgebende Moldingmasse ausgebildet sein.

Der Fahrzeugsensor ist bevorzugt durch Anpressen oder Einpressen des Trägers oder des Sensorgehäuses innerhalb des Fahrzeugs oder innerhalb einer Zentraleinheit angebracht.

Weitere Einsatzmöglichkeiten der Vorrichtung sind beispielsweise der Einsatz in Diagnose- oder Überwachungssystemen, bei denen eine Schwingungsanalyse bestimmter Elemente erforderlich ist, wie z. B. einer Kugel- oder Rolllagerüberwachung, der Einsatz in Fahrbahnzustandsüberwachungssystemen, bei denen eine Schwingungsanalyse der im Fahrwerk auftretenden Schwingungen durchgeführt wird, bei Stabilitäts- und Bremssystemen im Fahrzeug oder bei Fahrdynamikregelungssystemen.

Die Erfindung betrifft ferner ein Verfahren zur Auslösung eines Sicherheitssystems in einem Fahrzeug mit mindestens einem Fahrzeugsensor, der Schwingungen in Frequenzbereichen erfasst, die sowohl durch eine Beschleunigung als auch durch Körperschall verursacht werden und mindestens einen Messwertaufnehmer zum Erfassen von Schwingungen umfasst, und einer Zentraleinheit, die Sensorsignale des mindestens einen Fahrzeugsensors auswertet und davon abhängig das Sicherheitssystem auslöst. Der mindestens eine Fahrzeugsensor weist dabei eine erste Empfindlichkeitsrichtung des mindestens einen Messwertaufnehmers zur Erfassung der Beschleunigung und eine zweite Empfindlichkeitsrichtung des mindestens einen Messwertaufnehmers zur Erfassung des Körperschalls auf.

Vorzugsweise liefert mindestens ein zweiter Fahrzeugsensor Signale an die Zentraleinheit. Mit zwei Fahrzeugsensoren kann bereits eine beispielsweise aus Fahrzeugquerachse und -längsachse gebildete Ebene hinsichtlich Beschleunigung und Körperschall, insbesondere longitudinalem Körperschall, überwacht werden.

Weiterhin ist das Verfahren ausgebildet, eine Erfassung der Beschleunigung und/oder des Körperschalls durch eine geeignete Einstellung der ersten und der zweiten Empfindlichkeitsrichtung des mindestens einen Fahrzeugsensors zu ermöglichen. Damit kann die Beschleunigung und der Körperschall in gleichen oder unterschiedlichen Empfindlichkeitsrichtungen erfasst werden.

Vorzugsweise ist das Verfahren ausgebildet, eine Erfassung der Beschleunigung und/oder des longitudinalen Körperschalls durch eine geeignete Einstellung der ersten und der zweiten Empfindlichkeitsrichtung des mindestens einen Fahrzeugsensors erfolgt. Der Vorteil der Erfassung und Auswertung longitudinaler Körperschallwellen im Vergleich zu transversalen Körperschallwellen liegt darin, dass eine Bestimmung des Ursprungsortes der longitudinalen Körperschallwelle und damit des Ursprungsortes des Zusammenstosses mit einem Hindernis möglich ist.

Das Verfahren kann außerdem eine Signalplausibilisierung eines Signalanteils der Beschleunigung und/oder des Körperschalls des ersten Fahrzeugsensors mit einem Signalanteil der Beschleunigung und/oder des Körperschalls des mindestens einen zweiten Fahrzeugsensors durchführen.

Alternativ oder zusätzlich kann das Verfahren auch eine Signalplausibilisierung des Signalanteils der Beschleunigung des ersten Fahrzeugsensors mit dem Signalanteil des Körperschalls des ersten Fahrzeugsensors durchführen.

Ebenso kann das Verfahren eine Signalplausibilisierung des Signalanteils der Beschleunigung des mindestens einen zweiten Fahrzeugsensors mit dem Signalanteils des Körperschalls des mindestens einen zweiten Fahrzeugsensors durchführen. Jeder Fahrzeugsensor führt damit eine Signalplausibilisierung der zwei Signalanteile des Fahrzeugsensors untereinander durch, die technisch mit wenig Aufwand realisierbar ist.

Damit am Ausgang des Fahrzeugsensors ein Signal zur Verfügung gestellt wird, das die gewünschten Frequenzanteile der Beschleunigung und des Körperschalls liefert, kann das Verfahren ausgebildet sein, die Messwertaufnehmersignale selektiv zu filtern.

Schließlich kann die Vorrichtung gemäß der Erfindung auch in Diagnoseeinrichtungen eines Fahrzeugs verwendet werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Ausführungsbeispiel einer Vorrichtung zur Auslösung eines Sicherheitssystems in einem Fahrzeug gemäß dem Stand der Technik mit mehreren Auslösesensoren und einer Zentraleinheit;
- Fig. 2: zwei Anordnungsbeispiele von Beschleunigungssensoren und einer Zentraleinheit einer Vorrichtung zur Auslösung eines Sicherheitssystems in einem Fahrzeug gemäß dem Stand der Technik;
- Fig. 3: eine Anordnung von Fahrzeugsensoren gemäß der Erfindung und einer Zentraleinheit in einem Fahrzeug;
- Fig. 4a: ein Blockschaltbild des Fahrzeugsensors;
- Fig. 4b: die Filtercharakteristik der Verarbeitungseinheit des Fahrzeugsensors;
- Fig. 5a: eine Darstellung des Fahrzeugsensors mit einem piezoelektrischen Messwertaufnehmer ohne Krümmung des Trägers; und
- Fig. 5b: eine Darstellung des Fahrzeugsensors mit einem piezoelektrischen Messwertaufnehmer mit einer Krümmung des Trägers von 90°.
- Fig. 6: eine erste Ausführungsform der Vorrichtung gemäß der vorliegenden Ansprüche mit zwei Fahrzeugsensoren, deren resultierende Empfindlichkeitsrichtungen in einem Winkel von 90° zueinander ausgerichtet sind; und
- Fig. 7: eine zweite Ausführungsform der Vorrichtung gemäß der vorliegenden Ansprüche mit zwei Fahrzeugsensoren, wobei die erste Empfindlichkeitsrichtung des ersten Fahrzeugsensors und die zweite Empfindlichkeitsrichtung des zweiten Fahrzeugsensors gleich sind und die zweite Empfindlichkeitsrichtung des ersten Fahrzeugsensors und die erste Empfindlichkeitsrichtung des zweiten Fahrzeugsensors gleich sind.

Im folgenden wird die Anwendung des erfindungsgemässen Fahrzeugsensors als Auslösesensor für ein Insassenschutzsystem erläutert. Diese Beschreibung ist jedoch nicht als die Erfindung einschränkend zu verstehen, da der Fahrzeugsensors auch für andere Anwendungsgebiete vorteilhaft eingesetzt werden kann, wie beispielsweise in Diagnose- oder Überwachungssystemen, bei denen eine Schwingungsanalyse bestimmter Elemente erforderlich ist, wie z. B. einer Kugel- oder Rolllagerüberwachung, in Fahrbahnzustandsüberwachungssystemen, bei denen eine Schwingungsanalyse der im Fahrwerk auftretenden Schwingungen durchgeführt wird, bei Stabilitäts- und Bremssystemen im Fahrzeug oder bei Fahrdynamikregelungssystemen.

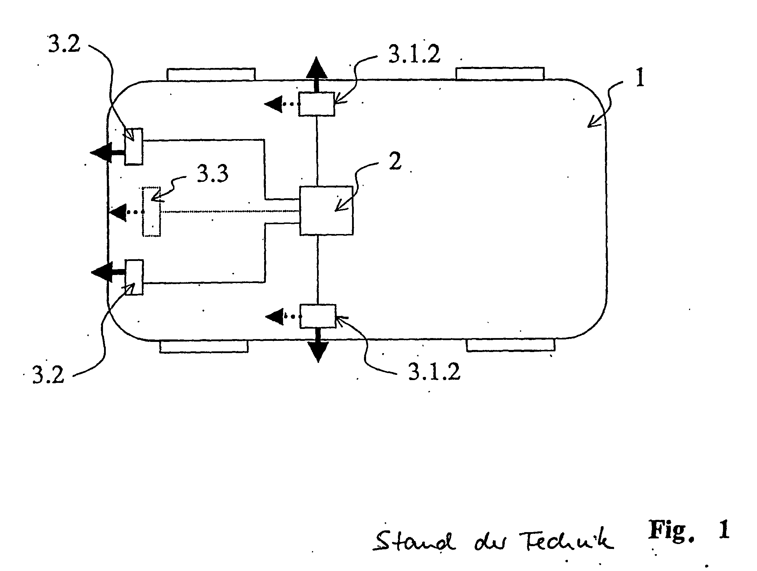

In Fig. 1 ist eine Vorrichtung zur Auslösung eines Sicherheitssystems, insbesondere eines Insassenschutzsystems, in einem Fahrzeug gemäß dem Stand der Technik mit mehreren Auslösesensoren 3.1.2, 3.2, 3.3 und einer Zentraleinheit 2 dargestellt. Die Zentraleinheit 2 ist zentral im Fahrzeug, vorzugsweise im Mitteltunnel des Fahrzeugs angeordnet und steuert die entsprechenden Sicherheitssysteme wie Insassenschutzsysteme oder Fußgängerschutzsysteme.

Die Seitensensoren 3.1.2 sind seitlich im Fahrzeug 1 zur Erkennung eines Seitencrashs angebracht und besitzen eine Empfindlichkeitsrichtung in Richtung der Fahrzeugquerachse. Zusätzlich beinhalten diese Sensoren oft auch eine Empfindlichkeitsrichtung in Richtung der Fahrzeuglängsachse. Diese zusätzliche Empfindlichkeitsrichtung ermöglicht beispielsweise eine Plausibilisierung eines durch die Sensoren 3.1.2 erzeugten Sensorausgangssignals, insbesondere bei Unfällen, bei denen die bei einem Unfall oder Zusammenstoss entstehende Krafteinwirkung in einem schrägen Winkel zur Fahrzeuglängs- bzw. -querachse auftritt.

Die im vorderen Bereich des Fahrzeugs angebrachten Sensoren 3.2, 3.3 werden als Upfront-Sensoren zur Erkennung eines Frontalcrashs eingesetzt, bei dem die Krafteinwirkung hauptsächlich in Richtung der Fahrzeuglängsachse auftritt. Diese Sensoren 3.2, 3.3 besitzen deshalb eine Empfindlichkeitsrichtung in Richtung der Fahrzeuglängsachse. Dabei wird entweder ein einzelner Sensor 3.3 mittig in Bezug auf die Fahrzeuglängsachse oder zwei Sensoren 3.2 außerhalb der Fahrzeuglängsachse im vorderen Bereich, beispielsweise der Stoßstange, angeordnet.

Die Seiten- und Upfront-Sensoren sind möglichst nahe an der Fahrzeugaußenhaut angebracht, um auch Zusammenstösse mit kleineren Objekten möglichst schnell detektieren zu können. Eine schnelle Detektion eines Aufpralls ist besonders im Seitenbereich des Fahrzeugs wichtig, da hier die Knautschzone relativ klein ist und beispielsweise ein Insassenschutzsystem deshalb besonders schnell auslösen sollte. Allerdings sind diese Sensoren nahe der Fahrzeugaußenhaut besonders anfällig auf Störungen im Vergleich zu Sensoren, die in Inneren des Fahrzeugs angebracht sein müssen wie die Seitensensoren. Deshalb werden zur Crashdetektion auch Körperschallsensoren eingesetzt, die nicht so nahe an der Fahrzeugaußenhaut angebracht werden, da sich Körperschallwellen weitaus schneller im Fahrzeug ausbreiten als durch Beschleunigungänderungen erzeugte Schwingungen.

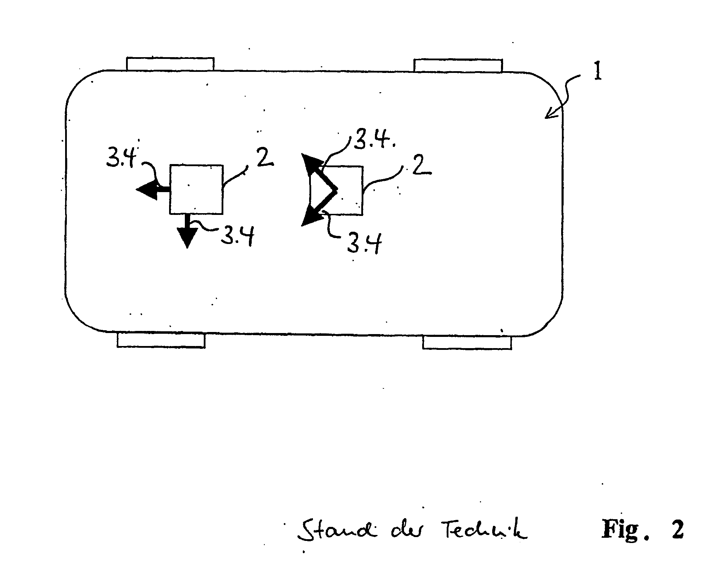

Fig. 2 zeigt zwei Anordnungsbeispiele von Beschleunigungssensoren 3.4 und einer Zentraleinheit 2 einer Vorrichtung zur Auslösung eines Sicherheitssystems in einem Fahrzeug 1 gemäß dem Stand der Technik. Mittels einer Anordnung von zwei Beschleunigungssensoren 3.4, deren Empfindlichkeitsrichtung in einem bestimmten Winkel zueinander ausgerichtet sind, lässt sich eine aus Fahrzeuglängsachse und Fahrzeugquerachse gebildete Ebene hinsichtlich crashrelevanter Beschleunigungsänderungen überwachen. Vorzugsweise werden dabei die zwei in Fig. 2 dargestellten Anordnungen verwendet, bei denen die Empfindlichkeitsrichtungen in einem Winkel von 90° zueinander angeordnet sind. In der ersten Anordnung ist die Empfindlichkeitsrichtung des ersten Beschleunigungssensors parallel zur Fahrzeuglängsachse ausgerichtet, die Empfindlichkeitsrichtung des zweiten Beschleunigungssensors in Richtung der Fahrzeugquerachse. In der zweiten Anordnung sind die Empfindlichkeitsrichtungen der beiden Beschleunigungssensoren um +/- 45° zur Fahrzeuglängsachse versetzt.

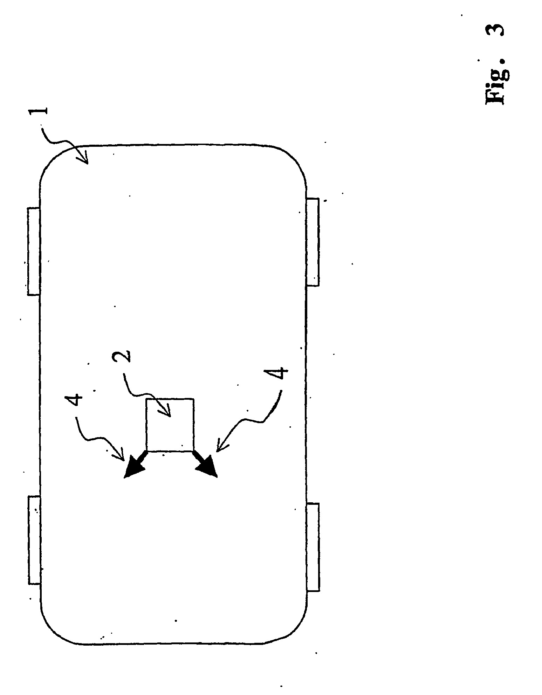

In Fig. 3 ist eine Anordnung von Fahrzeugsensoren 4 gemäß der vorliegenden Ansprüche und einer Zentraleinheit 2 in einem Fahrzeug abgebildet. Da diese Fahrzeugsensoren 4 neben der Beschleunigung auch den Körperschall erfassen, ist eine Anbringung nahe der Fahrzeugaußenhaut nicht erforderlich, da sich die Körperschallwellen weitaus schneller im Fahrzeug ausbreiten als die durch Beschleunigungänderungen erzeugten Schwingungen und ein Crash in einer zur Auslösung des Sicherheitssystems erforderlichen Zeit detektiert werden kann. Mit der dargestellten Anordnung von zwei Fahrzeugsensoren lässt sich eine aus Fahrzeuglängsachse und Fahrzeugquerachse gebildete Ebene hinsichtlich Körperschall und crashrelevanter Beschleunigungsänderungen überwachen.

Weiterhin ist es möglich, eine Signalplausibilisierung der jeweiligen Sensorausgangssignale der Fahrzeugsensoren 4 durchzuführen, indem entweder das Sensorausgangssignal des ersten Fahrzeugsensors 4 mit dem Sensorausgangssignal des zweiten Fahrzeugsensors 4 plausibilisiert wird oder beispielsweise der die Beschleunigung wiedergebende Signalanteil des Fahrzeugsensors 4 mit dem den Körperschall wiedergebenden Signalanteil desselben Fahrzeugsensors 4 plausibilisiert wird. Außerdem können zur Signalplausibilisierung Sensorausgangssignale weiterer im Fahrzeug angebrachter Fahrzeugsensoren 4 herangezogen werden.

Da der Fahrzeugsensor 4 an unterschiedlichen Orten im Fahrzeug angebracht werden kann, wo je nach Unfallsituation niedrigere oder höhere Beschleunigungen messbar sind, kann abhängig von der Anwendung des Fahrzeugsensors 4 bei dessen Herstellungsprozess ein bestimmter Beschleunigungsbereich vorgegeben werden, der innerhalb von +/-1 g und von +/-1000g liegt. Wird der Fahrzeugsensor beispielsweise im Bereich der Stoßstange eines Fahrzeugs eingesetzt, sollte er Beschleunigungen in einem niedrigeren Bereich, die bei einem Zusammenstoss mit einem leichten Objekt auftreten, und Beschleunigungen in einem höheren Bereich bis +/-1000g erfassen, die beispielsweise bei einem Zusammenstoss mit einem anderen Fahrzeug auftreten. Der Beschleunigungsbereich sollte derart gewählt werden, dass der Fahrzeugsensor 4 einerseits die erforderlichen Beschleunigungen misst, um einen Unfall detektieren zu können, andererseits aber eine Übersteuerung der Verarbeitungseinheit zur Verarbeitung der Messwertaufnehmersignale vermieden wird. Alternativ kann der Fahrzeugsensor ausgebildet sein, dass eine kundenspezifische Programmierung des Beschleunigungsbereichs je nach Einsatz des Fahrzeugsensors vorgenommen werden kann.

Die Verarbeitungseinheit 4.2 des Fahrzeugsensors umfasst eine Verstärkerschaltung, die die verschiedenen Signalanteile, welche die gemessene Beschleunigung und den gemessenen Körperschall wiedergeben, verstärkt. Insbesondere ist die Verarbeitungseinheit 4.2 ausgebildet, um Messwertaufnehmersignale mit hoher Amplitude ohne Übersteuerung der Verstärkerschaltung zu erfassen. Die Verstärkerschaltung erfasst und verstärkt beispielsweise Messwertaufnehmersignale des longitudinalen Körperschalls, die niedrigere Amplituden im Vergleich zu denen des transversalen Körperschalls aufweisen, aber auch Messwertsignale der Beschleunigung oder des transversalen Körperschalls mit höheren Amplituden.

Damit am Ausgang des Fahrzeugsensors ein Signal zur Verfügung steht, das die gewünschten Frequenzanteile der Beschleunigung und des Körperschalls liefert, umfasst die Verarbeitungseinheit 4.2 ein Filter zum selektiven Erfassen der Beschleunigung und des Körperschalls. Eine externe Signalfilterung ist dann nicht mehr erforderlich und verringert den Aufwand für die weitere Auswertung des Signals des Fahrzeugsensors. Das Filter in der Verarbeitungseinheit 4.2 kann programmierbar sein, damit eine kundenspezifische Programmierung der Filtercharakteristik vorgenommen werden kann und der Kunde die für seine spezielle Anwendung benötigten Signalanteile selektieren kann. Alternativ kann das Filter in der Verarbeitungseinheit 4.2 ausgebildet sein, dass es während des Herstellungsprozesses des Fahrzeugsensors einstellbar ist. Damit kann bereits während der Fertigung des Fahrzeugsensors eine Auswahl der für eine spezielle Anwendung benötigten Signalanteile getroffen werden.

Der Fahrzeugsensor 4 kann übrigens nicht nur zur Crashdetektion eingesetzt werden. Weitere Einsatzmöglichkeiten sind beispielsweise der Einsatz in Diagnose- oder Überwachungssystemen, bei denen eine Schwingungsanalyse bestimmter Elemente erforderlich ist, wie z. B. einer Kugel- oder Rolllagerüberwachung, der Einsatz in Fahrbahnzustandsüberwachungssystemen, bei denen eine Schwingungsanalyse der im Fahrwerk auftretenden Schwingungen durchgeführt wird, bei Stabilitäts- und Bremssystemen im Fahrzeug oder bei Fahrdynamikregelungssystemen. Die Fahrzeugsensoren überwachen dabei Bewegungen eines Systems. Die Empfindlichkeitsrichtung der Beschleunigung und des Körperschalls werden durch die Anwendung vorgegeben und bei der Herstellung des Fahrzeugsensors durch die Bauart des Fahrzeugsensors definiert.

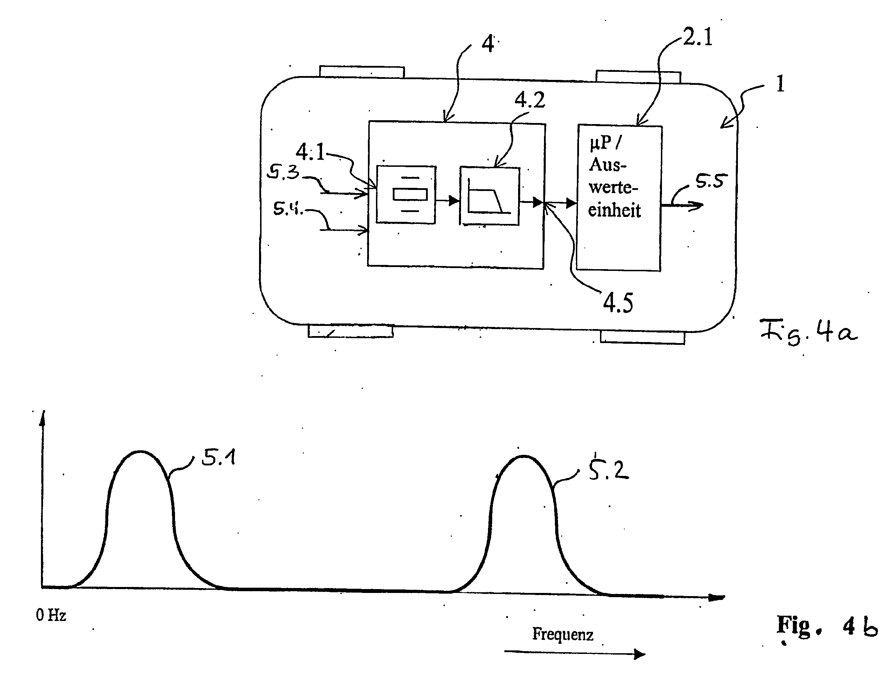

Fig. 4a zeigt ein Blockschaltbild des Fahrzeugsensors 4, der einen Messwertaufnehmer 4.1 für die Erfassung von Beschleunigung und von Körperschall und eine Verarbeitungseinheit 4.2 zur Verarbeitung der Messwertaufnehmersignale umfasst. Die Verarbeitungseinheit 4.2 beinhaltet ein Filter zum selektiven Erfassen der Beschleunigung und des Körperschalls. Damit wird ein Sensorausgangssignal 4.5 zur Verfügung gestellt, das die gewünschten Frequenzanteile der Beschleunigung und des Körperschalls liefert. Da die longitudinalen Körperschallwellen im Vergleich zu den transversalen Körperschallwellen oder im Vergleich zur Beschleunigung geringere Amplituden aufweisen, ist eine entsprechende Verstärkerschaltung vorgesehen, die eine Verarbeitung der longitudinalen Körperschallwellen ermöglicht. Die Verarbeitungseinheit 4.2 kann außerdem einen A/D-Wandler beinhalten, der das Sensorausgangssignal 4.5 in digitaler Form zur Verfügung stellt. Das Sensorausgangssignal 4.5 in analoger oder digitaler Form wird dann von einer Auswerteeinheit 2.1 in der Zentraleinheit 2 verarbeitet, um ein Auslösesignal für ein Sicherheitssystem, beispielsweise ein Insassenschutzsystem, zu erzeugen.

Fig. 4b zeigt eine entsprechende Filtercharakteristik der Verarbeitungseinheit 4.2 des Fahrzeugsensors 4 von Fig. 4a, bei der die Frequenzanteile der Beschleunigung im unteren Frequenzbereich (kleiner als etwa 500 Hz) und die Frequenzanteile des Körperschalls im oberen Frequenzbereich (größer als etwa 4 kHz) erfasst werden.

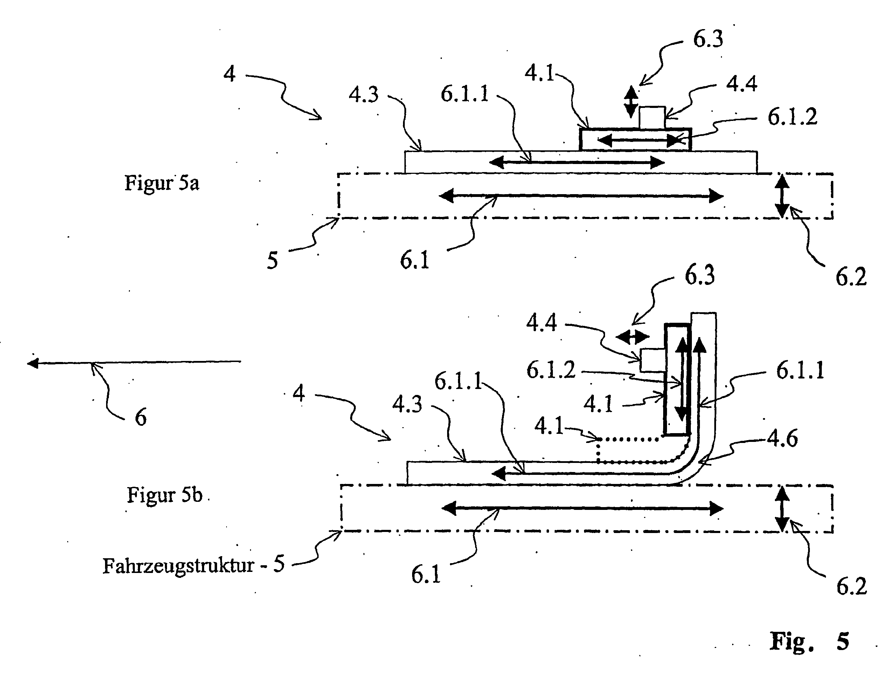

Fig. 5a enthält eine Darstellung eines Fahrzeugsensors 4 mit einem piezoelektrischen Messwertaufnehmer ohne Krümmung des Trägers 4.3. Der Fahrzeugsensor 4 ist auf einem Fahrzeugelement 5 angebracht, vorzugsweise durch Einpressen oder Anpressen des Trägers 4.3 innerhalb oder in der Nähe der Zentraleinheit oder in der Nähe der Fahrzeugaußenhaut. Der Messwertaufnehmer 4.1 ist vorzugsweise durch eine kraftschlüssige Verbindung, beispielsweise durch eine Klebung, auf dem Träger 4.3 angebracht. Die kraftschlüssige Verbindung ist derart ausgebildet, dass sie einerseits eine Erfassung der beispielsweise in longitudinaler Richtung wirkenden Beschleunigung und des Körperschalls ermöglicht, andererseits die Aufnahme unerwünschter Signale durch den Messwertaufnehmer verringert oder verhindert. Eine zur Messung auftretender Beschleunigungen erforderliche seismische Masse 4.4 ist direkt am Messwertaufnehmer 4.1 angebracht, vorzugsweise angeklebt.

Alternativ kann die seismische Masse 4.4 auch im Messwertaufnehmer 4.1 integriert sein. Wenn es sich bei dem Messwertaufnehmer 4.1 beispielsweise um einen mikromechanischen Aufnehmer handelt, sind zur Aufnahme von Beschleunigungen Kammstrukturen vorgesehen, deren Verschiebung gegeneinander ein Maß der Beschleunigung darstellt. In diesem Fall handelt es sich bei der seismischen Masse 4.4 um eine bewegliche Kammstruktur, die sich gegenüber fest angebrachten Kammstrukturen verschiebt.

Bei einem in Stoßrichtung 6 erfolgten Zusammenstoß, beispielsweise einem Crash, breiten sich die longitudinalen Körperschallwellen in derselben Richtung 6.1 wie die Stoßrichtung 6 aus. Die Ausbreitungsrichtung der transversalen Körperschallwellen 6.2 ist dagegen senkrecht zur Stoßrichtung 6. Die longitudinalen Körperschallwellen werden über den Träger 4.3 auf den Messwertaufnehmer 4.1 übertragen, wobei die Ausbreitungsrichtung der auf den Träger 4.3 übertragenen longitudinalen Körperschallwellen 6.1.1 und der im Messwertaufnehmer 4.1 aufgenommenen longitudinalen Körperschallwellen 6.1.2 parallel zur Stoßrichtung und der ursprünglichen Ausbreitungsrichtung der im Fahrzeugelement übertragenen longitudinalen Körperschallwelle 6.1 verläuft.

Aufgrund der Konstruktion des Fahrzeugsensors 4 mit der direkt am Messwertaufnehmer 4.1 angebrachten seismischen Masse 4.4 wird eine Bescheunigung vom Messwertaufnehmer 4.1 detektiert, die eine Ausbreitungsrichtung 6.3 senkrecht zur Ausbreitungsrichtung der longitudinalen Körperschallwelle aufweist. Die erste Empfindlichkeitsrichtung des Messwertaufnehmers 4.1 zur Erfassung der Beschleunigung 6.3 ist damit nicht identisch mit der zweiten Empfindlichkeitsrichtung des Messwertaufnehmers 4.1 zur Erfassung der longitudinalen Körperschallwellen 6.1.2.

Um eine identische Empfindlichkeitsrichtung sowohl für die Erfassung der Beschleunigung als auch für die Erfassung der longitudinalen Körperschallwellen zu erreichen, wird, wie in Fig. 5b gezeigt, durch eine Krümmung des Trägers 4.3 eine Ablenkung der longitudinalen Körperschallwellen durchgeführt, sodass dem Messwertaufnehmer 4.1 die in geänderter Ausbreitungsrichtung verlaufenden Körperschallwellen 6.1.2 zugeführt werden, wobei die Ausbreitungsrichtung der Beschleunigung 6.3 gleich ist der Ausbreitungsrichtung der longitudinalen Körperschallwellen 6.1. Die Krümmung des Trägers 4.6 wird dabei so ausgeführt, dass eine Änderung der Ausbreitungsrichtung der longitudinalen Körperschallwellen 6.1.2 um 90° erfolgt, aber vorzugsweise eine Entstehung von Reflexionswellen verhindert wird.

Grundsätzlich ist es möglich, durch eine geeignete Wahl eines Winkels in der Krümmung des Trägers 4.6 jede geforderte Empfindlichkeitsrichtung zur Erfassung der Beschleunigung und des longitudinalen Körperschalls einzustellen. Vorzugsweise wird unter Berücksichtigung der Empfindlichkeitsrichtung der seismischen Masse 4.4 der Winkel gewählt, der die erste und die zweite Empfindlichkeitsrichtung identisch einstellt.

Ist der Messwertaufnehmer 4.1 beispielsweise als biegsame piezoelektrische Schicht ausgeführt, kann dieser nicht nur an einem geraden Teil des Trägers 4.3 angebracht sein, sondern sich, wie gepunktet dargestellt, auch über den Krümmungsbereich des Trägers 4.3 erstrecken. Weitere Ausführungsformen des Messwertaufnehmers 4.1 können Dehnmessstreifen, magnetorestriktive Aufnehmer oder mikromechanische Aufnehmer sein.

Der Träger 4.3 ist derart konstruiert, dass er einerseits eine Erfassung der in longitudinaler Richtung wirkenden Beschleunigung und des Körperschalls ermöglicht, andererseits die Übertragung unerwünschter Signale zum Messwertaufnehmer 4.1 verringert oder verhindert. Der Träger ist vorzugsweise als für die Molding Technik geeignetes Lead Frame oder als für die Molding Technik geeigneter Mechatronik-Träger ausgebildet. Als Sensorgehäuse dient eine den Träger umgebende Moldingmasse.

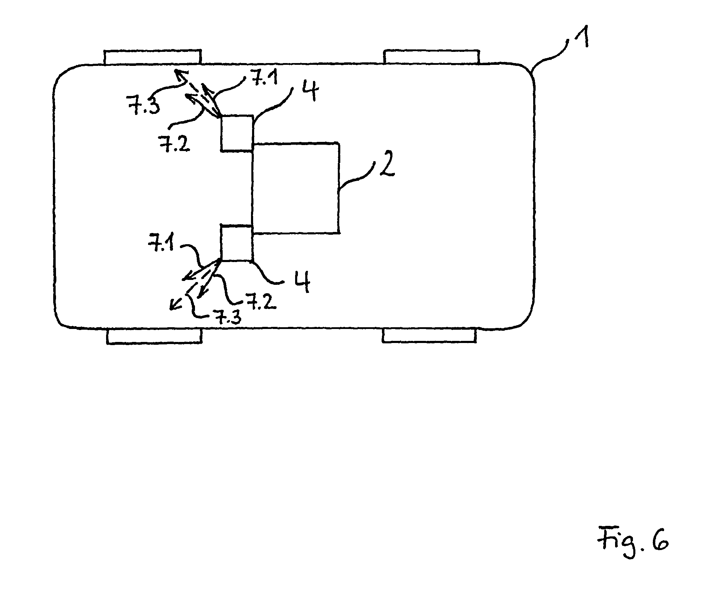

Fig. 6 zeigt eine erste Ausführungsform der Vorrichtung gemäß der vorliegenden Ansprüche in einem Fahrzeug 1 mit einer Zentraleinheit 2 und zwei Fahrzeugsensoren 4, deren resultierende Empfindlichkeitsrichtungen 7.3 in einem Winkel von 90° zueinander ausgerichtet sind. Dabei sind die erste 7.1 und die zweite Empfindlichkeitsrichtung 7.2 des jeweiligen Fahrzeugsensors 4 gleich oder nahezu gleich ausgerichtet, wobei die erste oder zweite Empfindlichkeitsachse nicht mehr als +/- 20° von der resultierenden Empfindlichkeitsachse abweicht. Mit dieser Anordnung lässt sich eine aus Fahrzeuglängsachse und Fahrzeugquerachse gebildete Ebene hinsichtlich Körperschall und crashrelevanter Beschleunigungsänderungen überwachen.

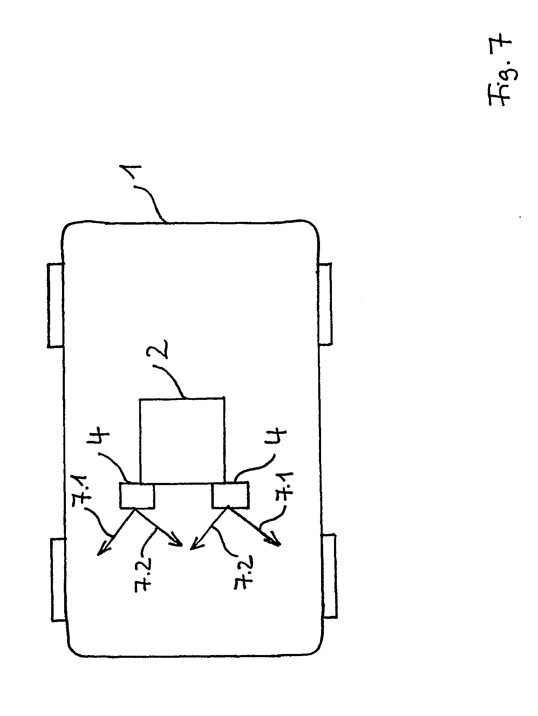

Fig. 7 hingegen zeigt eine zweite Ausführungsform der Vorrichtung gemäß der vorliegenden Ansprüche in einem Fahrzeug 1 mit einer Zentraleinheit 2 und zwei Fahrzeugsensoren 4, wobei die erste Empfindlichkeitsrichtung 7.1 des ersten Fahrzeugsensors 4 und die zweite Empfindlichkeitsrichtung 7.2 des zweiten Fahrzeugsensors 4 gleich sind und die zweite Empfindlichkeitsrichtung 7.2 des ersten Fahrzeugsensors und die erste Empfindlichkeitsrichtung 7.1 des zweiten Fahrzeugsensors gleich sind.

Bei derartigen Anordnungen, bei denen die erste 7.1 und die zweite Empfindlichkeitsrichtung 7.2 unterschiedlich ausgerichtet sind, kann beispielsweise der die Beschleunigung wiedergebende Signalanteil des ersten Fahrzeugsensors 4 mit dem den longitudinalen Körperschall wiedergebenden Signalanteil des zweiten Fahrzeugsensors 4 verknüpft werden, um in der Zentraleinheit 2 ein plausibilisiertes Auslösesignal für ein Sicherheitssystem, insbesondere ein Insassenschutzsystem, zu erzeugen. Umgekehrt ist dieselbe Signalplausibilisierung mit dem die Beschleunigung wiedergebenden Signalanteil des zweiten Fahrzeugsensors und dem den longitudinalen Körperschall wiedergebenden Signalanteil des ersten Fahrzeugsensors möglich.

Sollten weitere Fahrzeugsensoren 4 im Fahrzeug angeordnet sein, ist ebenfalls eine Signalplausibilisierung mit Signalanteilen dieser Fahrzeugsensoren möglich, wobei jeweils ein die Beschleunigung wiedergebender Signalanteil des einen Fahrzeugsensors mit einem den longitudinalen Körperschall wiedergebenden Signalanteil eines weiteren Fahrzeugsensors 4 verknüpft wird.

Je nach Anzahl der Verknüpfungen der einzelnen Signalanteile und Ausrichtung der Empfindlichkeitsrichtungen der jeweiligen Fahrzeugsensoren 4 lässt sich eine unterschiedlich aufwändige Signalplausibilisierung durchführen.

### Bezugszeichen

- 1: Fahrzeug
- 2: Zentraleinheit
- 2.1: Auswerteeinheit in der Zentraleinheit
- 3.1.2: Seitensensoren mit Empfindlichkeitsrichtungen in Fahrzeugquer- und -längsachse
- 3.2: paarweise angeordnete Upfront-Sensoren
- 3.3: einzelner, mittig angeordneter Upfront-Sensor
- 3.4: Beschleunigungsaufnehmer
- 4: Fahrzeugsensor zur Erfassung einer Beschleunigung und von Körperschall
- 4.1: Messwertaufnehmer
- 4.2: Verarbeitungseinheit
- 4.3: Träger
- 4.4: seismische Masse
- 4.5: Sensorausgangssignal
- 4.6: Krümmung des Trägers
- 5: Fahrzeugelement
- 5.1: Spektralanteile der Beschleunigung
- 5.2: Spektralanteile des Körperschalls
- 5.3: Beschleunigung
- 5.4: Körperschall
- 5.5: Auslösesignal für ein Sicherheitssystem im Fahrzeug
- 6: Stoßrichtung
- 6.1: Ausbreitungsrichtung der longitudinalen Körperschallwelle
- 6.1.1: Ausbreitungsrichtung der auf den Träger 4.3 übertragenen longitudinalen Körperschallwelle
- 6.1.2: Ausbreitungsrichtung der im Messwertaufnehmer aufgenommenen longitudinalen Körperschallwelle
- 6.2: Ausbreitungsrichtung der transversalen Körperschallwelle
- 6.3: Ausbreitungsrichtung der Beschleunigung

- 7.1: erste Empfindlichkeitsrichtung der Beschleunigung
- 7.2: zweite Empfindlichkeitsrichtung des longitudinalen Körperschalls
- 7.3: resultierende Empfindlichkeitsrichtung des Fahrzeugsensors

## Patentansprüche

1. Vorrichtung zur Auslösung eines Sicherheitssystems in einem Fahrzeug mit mindestens zwei Fahrzeugsensoren (4), die jeweils Schwingungen in Frequenzbereichen erfassen können, die sowohl durch eine Beschleunigung als auch durch Körperschall verursacht werden, und mindestens jeweils einen Messwertaufnehmer (4.1) zum Erfassen von Schwingungen umfassen,
und einer Zentraleinheit (2), die Signale der Fahrzeugsensoren (4) auswertet und davon abhängig das Sicherheitssystems auslöst,
**dadurch gekennzeichnet, dass die**
Fahrzeugsensoren jeweils
a) eine erste Empfindlichkeitsrichtung (7.1) des mindestens einen Messwertaufnehmers (4.1) zur Erfassung der Beschleunigung und
b) eine zweite Empfindlichkeitsrichtung (7.2) des mindestens einen Messwertaufnehmers (4.1) zur Erfassung des Körperschalls aufweisen,
c) die erste Empfindlichkeitsrichtung (7.1) und die zweite Empfindlichkeitsrichtung (7.2) des jeweiligen Fahrzeugsensors (4) in einem Winkel von nahezu 90 Grad zueinander ausgerichtet sind
d) wobei die Fahrzeugsensoren so zueinander angeordnet sind, daß die erste Empfindlichkeitsrichtung (7.1) des ersten Fahrzeugsensors und die zweite Empfindlichkeitsrichtung (7.2) des zweiten Fahrzeugsensors und die zweite Empfindlichkeitsrichtung (7.1) des ersten Fahrzeugsensors und die erste Empfindlichkeitsrichtung (7.2) des zweiten Fahrzeugsensors nahezu gleich sind.

2. Vorrichtung gemäß Anspruch 1, **dadurch gekennzeichnet, dass** sie ausgebildet ist, um eine Signalplausibilisierung eines Signalanteils der Beschleunigung und/oder des Körperschalls des ersten Fahrzeugsensors (4) mit einem Signalanteil der Beschleunigung und/oder des Körperschalls des mindestens einen zweiten Fahrzeugsensors (4) durchzuführen.

3. Vorrichtung gemäß Anspruch 2, **dadurch gekennzeichnet, dass** ein aus der Beschleunigung des ersten Fahrzeugssensors ermitteltes Auslösesignal mit einem aus dem Körperschall des zweiten Fahrzeugsensors ermittelten Plausibilisierungssignal verknüpft wird und
ein aus der Beschleunigung des zweiten Fahrzeugssensors ermitteltes Auslösesignal mit einem aus dem Körperschall des ersten Fahrzeugsensors ermittelten Plausibilisierungssignal verknüpft wird.

4. Vorrichtung gemäß einem der vorhergehenden Ansprüche, **dadurch gekennzeichnet, dass** der mindestens eine Messwertaufnehmer (4.1) longitudinalen Körperschall erfasst.

5. Vorrichtung gemäß einem der vorangehenden Ansprüche, **dadurch gekennzeichnet, dass** der mindestens eine Messwertaufnehmer (4.1) ausgebildet ist, um eine Programmierung eines bestimmten Beschleunigungsbereichs zu ermöglichen.

6. Vorrichtung gemäß Anspruch 5, **dadurch gekennzeichnet, dass** der mindestens eine Messwertaufnehmer (4.1) ausgebildet ist, um während des Herstellungsprozesses des Fahrzeugsensors (4) die Einstellung eines bestimmten Beschleunigungsbereichs zu ermöglichen.

7. Vorrichtung gemäß einem der vorangehenden Ansprüche, **dadurch gekennzeichnet, dass** die Verarbeitungseinheit (4.2) ein Filter zum selektiven Erfassen der Beschleunigung und/oder des Körperschalls umfasst.

8. Vorrichtung gemäß Anspruch 7, **dadurch gekennzeichnet, dass** das Filter in der Verarbeitungseinheit (4.2) programmierbar ist, um ein selektives Erfassen der Beschleunigung und/oder des Körperschalls zu ermöglichen.

9. Vorrichtung gemäß Anspruch 8, **dadurch gekennzeichnet, dass** das Filter in der Verarbeitungseinheit (4.2) während des Herstellungsprozesses des Fahrzeugsensors (4) einstellbar ist, um ein selektives Erfassen der Beschleunigung und/oder des Körperschalls zu ermöglichen.

10. Vorrichtung gemäß einem der vorangehenden Ansprüche, **dadurch gekennzeichnet, dass** die Verarbeitungseinheit (4.2) ausgebildet ist, Messwertaufnehmersignale mit hoher Amplitude ohne Übersteuerung einer in der Verarbeitungseinheit (4.2) angeordneten Verstärkerschaltung zu erfassen.

11. Vorrichtung gemäß einem der vorangehenden Ansprüche, **dadurch gekennzeichnet dass**
der mindestens eine Messwertaufnehmer (4.1) ein piezoelektrischer Aufnehmer, ein Dehnmessstreifen, ein mikromechanischer Aufnehmer oder ein magnetorestriktiver Aufnehmer ist.

12. Verfahren zur Auslösung eines Sicherheitssystems in einem Fahrzeug mit mindestens zwei Fahrzeugsensoren (4), die Schwingungen in Frequenzbereichen erfassen, die sowohl durch eine Beschleunigung als auch durch Körperschall verursacht werden und jeweils mindestens einen Messwertaufnehmer (4.1) zum Erfassen von Schwingungen umfasst, und einer Zentraleinheit (2), die Sensorsignale der Fahrzeugsensoren auswertet und davon abhängig das Sicherheitssystem auslöst, **dadurch gekennzeichnet, dass** die Fahrzeugsensoren jeweils
a) eine erste Empfindlichkeitsrichtung (7.1) des mindestens einen Messwertaufnehmers (4.1) zur Erfassung der Beschleunigung und
b) eine zweite Empfindlichkeitsrichtung (7.2) des mindestens einen Messwertaufnehmers (4.1) zur Erfassung des Körperschalls aufweisen,
c) die erste Empfindlichkeitsrichtung (7.1) und die zweite Empfindlichkeitsrichtung (7.2) des jeweiligen Fahrzeugsensors (4) in einem Winkel von nahezu 90 Grad zueinander ausgerichtet sind
d) wobei die Fahrzeugsensoren so zueinander angeordnet sind, daß die erste Empfindlichkeitsrichtung (7.1) des ersten Fahrzeugsensors und die zweite Empfindtichkeitsrichtuhg (7.2) des zweiten Fahrzeugsensors und die zweite Empfindlichkeitsrichtung (7.1) des ersten Fahrzeugsensors und die erste Empfindlichkeitsrichtung (7.2) des zweiten Fahrzeugsensors nahezu gleich sind.

13. Verfahren gemäß Anspruch 12, **dadurch gekennzeichnet, dass** eine Signalplausibilisierung eines Signalanteils der Beschleunigung und/oder des Körperschalls des ersten Fahrzeugsensors (4) mit einem Signalanteil der Beschleunigung und/oder des Körperschalls des mindestens einen zweiten Fahrzeugsensors (4) durchgeführt wird.

14. Verfahren gemäß Anspruch 13, **dadurch gekennzeichnet, dass** ein aus der Beschleunigung des ersten Fahrzeugssensors ermitteltes Auslösesignal mit einem aus dem Körperschall des zweiten Fahrzeugsensors ermittelten Plausibilisierungssignal verknüpft wird und
ein aus der Beschleunigung des zweiten Fahrzeugssensors ermitteltes Auslösesignal mit einem aus dem Körperschall des ersten Fahrzeugsensors ermittelten Plausibilisierungssignal verknüpft wird.

## Claims

1. Device for tripping a safety system in a vehicle with at least two vehicle sensors (4) that each are capable of detecting oscillations in frequency ranges caused by both an acceleration and a structure-borne noise and that each comprise at least one transducer (4.1) for detecting oscillations, and
with a central processing unit (2) that evaluates signals of the vehicle sensors (4) and, depending thereon, trips the safety system,
**characterized in that**
the vehicle sensors each
a) have a first direction of sensitivity (7.1) of the at least one transducer (4.1) for detecting the acceleration and
b) a second direction of sensitivity (7.2) of the at least one transducer (4.1) for detecting the structure-borne noise,
c) the first direction of sensitivity (7.1) and the second direction of sensitivity (7.2) of the respective vehicle sensor (4) are oriented at an angle of almost 90 degrees relative to each other,
d) wherein the vehicle sensors are arranged relative to each other in such a manner that the first direction of sensitivity (7.1) of the first vehicle sensor and the second direction of sensitivity (7.2) of the second vehicle sensor and the second direction of sensitivity (7.1) of the first vehicle sensor and the first direction of sensitivity (7.2) of the second vehicle sensor are almost identical.

2. Device according to claim 1, **characterized in that** it is configured to perform a signal plausibility check of a signal portion of the acceleration and/or of the structure-borne noise of the first vehicle sensor (4) with a signal portion of the acceleration and/or of the structure-borne noise of the at least one second vehicle sensor (4).

3. Device according to claim 2, **characterized in that** a tripping signal determined from the acceleration of the first vehicle sensor is associated with a plausibility-check signal determined from the structure-borne noise of the second vehicle sensor,
and
a tripping signal determined from the acceleration of the second vehicle sensor is associated with a plausibility-check signal determined from the structure-borne noise of the first vehicle sensor.

4. Device according to any one of the preceding claims, **characterized in that** the at least one transducer (4.1) detects longitudinal structure-borne noise.

5. Device according to any one of the preceding claims, **characterized in that** the at least one transducer (4.1) is configured to enable a particular acceleration range to be programmed.

6. Device according to claim 5, **characterized in that** the at least one transducer (4.1) is configured to enable a particular acceleration range to be set during the manufacturing process of the vehicle sensor (4).

7. Device according to any one of the preceding claims, **characterized in that** the processing unit (4.2) comprises a filter for selectively detecting the acceleration and/or the structure-borne noise.

8. Device according to claim 7, **characterized in that** the filter in the processing unit (4.2) is programmable to enable the acceleration and/or the structure-borne noise to be detected selectively.

9. Device according to claim 8, **characterized in that** the filter in the processing unit (4.2) is settable during the manufacturing process of the vehicle sensor (4) to enable the acceleration and/or the structure-borne noise to be detected selectively.

10. Device according to any one of the preceding claims, **characterized in that** the processing unit (4.2) is configured to detect high-amplitude transducer signals without overdriving an amplifying circuit that is arranged in the processing unit (4.2).

11. Device according to any one of the preceding claims, **characterized in that** the at least one transducer (4.1) is a piezoelectric transducer, a strain gauge, a micromechanical transducer, or a magneto-restrictive transducer.

12. Method for tripping a safety system in a vehicle with at least two vehicle sensors (4) that detect oscillations in frequency ranges caused by both an acceleration and a structure-borne noise and that each comprise at least one transducer (4.1) for detecting oscillations, and with a central processing unit (2) that evaluates sensor signals of the vehicle sensors and, depending thereon, trips the safety system, **characterized in that** the vehicle sensors each
a) have a first direction of sensitivity (7.1) of the at least one transducer (4.1) for detecting the acceleration and
b) a second direction of sensitivity (7.2) of the at least one transducer (4.1) for detecting the structure-borne noise,
c) the first direction of sensitivity (7.1) and the second direction of sensitivity (7.2) of the respective vehicle sensor (4) are oriented at an angle of almost 90 degrees relative to each other,
d) wherein the vehicle sensors are arranged relative to each other in such a manner that the first direction of sensitivity (7.1) of the first vehicle sensor and the second direction of sensitivity (7.2) of the second vehicle sensor and the second direction of sensitivity (7.1) of the first vehicle sensor and the first direction of sensitivity (7.2) of the second vehicle sensor are almost identical.

13. Method according to claim 12, **characterized in that** a signal plausibility check of a signal portion of the acceleration and/or of the structure-borne noise of the first vehicle sensor (4) with a signal portion of the acceleration and/or of the structure-borne noise of the at least one second vehicle sensor (4) is performed.

14. Method according to claim 13, **characterized in that** a tripping signal determined from the acceleration of the first vehicle sensor is associated with a plausibility-check signal determined from the structure-borne noise of the second vehicle sensor, and
a tripping signal determined from the acceleration of the second vehicle sensor is associated with a plausibility-check signal determined from the structure-borne noise of the first vehicle sensor.

## Revendications

1. Dispositif de déclenchement d'un système de sécurité dans un véhicule avec au moins deux capteurs de véhicule (4) qui peuvent détecter chacun des vibrations dans des plages de fréquence qui sont provoquées aussi bien par une accélération que par le bruit de structure, et qui englobent au moins chacun un enregistreur de valeurs de mesure (4.1) pour la détection de vibrations,
et avec une unité centrale (2) qui analyse des signaux des capteurs de véhicule (4) et déclenche en fonction de cela le système de sécurité,
**caractérisé en ce que** les
capteurs de véhicule présentent chacun
a) une première direction de sensibilité (7.1) de l'enregistreur de valeurs de mesure (4.1), au moins au nombre de un, pour la détection de l'accélération et
b) une deuxième direction de sensibilité (7.2) de l'enregistreur de valeurs de mesure (4.1), au moins au nombre de un, pour la détection du bruit de structure,
c) la première direction de sensibilité (7.1) et la deuxième direction de sensibilité (7.2) de chaque capteur de véhicule (4) sont orientées l'une par rapport à l'autre selon un angle d'environ 90 degrés,
d) les capteurs de véhicule étant disposés l'un par rapport à l'autre de sorte que la première direction de sensibilité (7.1) du premier capteur de véhicule et la deuxième direction de sensibilité (7.2) du deuxième capteur de véhicule, et la deuxième direction de sensibilité (7.1) du premier capteur de véhicule et la première direction de sensibilité (7.2) du deuxième capteur de véhicule sont à peu près identiques.

2. Dispositif selon la revendication 1, **caractérisé en ce qu'**il est constitué pour effectuer une plausibilité de signal d'une partie de signal de l'accélération et/ou du bruit de structure du premier capteur de véhicule (4) avec une partie de signal de l'accélération et/ou du bruit de structure d'au moins le deuxième capteur de véhicule (4).

3. Dispositif selon la revendication 2, **caractérisé en ce qu'**un signal de déclenchement déterminé à partir de l'accélération du premier capteur de véhicule est relié à un signal de plausibilité déterminé à partir du bruit de structure du deuxième capteur de véhicule
et
un signal de déclenchement déterminé à partir de l'accélération du deuxième capteur de véhicule est relié à un signal de plausibilité déterminé à partir du bruit de structure du premier capteur de véhicule.

4. Dispositif selon une des revendications précédentes, **caractérisé en ce que** l'enregistreur de valeurs de mesure (4.1), au moins au nombre de un, détecte le bruit de structure longitudinal.

5. Dispositif selon une des revendications précédentes, **caractérisé en ce que** l'enregistreur de valeurs de mesure (4.1), au moins au nombre de un, est constitué pour permettre une programmation d'une plage d'accélération définie.

6. Dispositif selon la revendication 5, **caractérisé en ce que** l'enregistreur de valeurs de mesure (4.1), au moins au nombre de un, est constitué pour permettre, pendant le processus de fabrication du capteur de véhicule (4), le réglage d'une plage d'accélération définie.

7. Dispositif selon une des revendications précédentes, **caractérisé en ce que** l'unité de traitement (4.2) englobe un filtre pour la détection sélective de l'accélération et/ou du bruit de structure.

8. Dispositif selon la revendication 7, **caractérisé en ce que** le filtre dans l'unité de traitement (4.2) est programmable pour permettre une détection sélective de l'accélération et/ou du bruit de structure.

9. Dispositif selon la revendication 8, **caractérisé en ce que** le filtre dans l'unité de traitement (4.2) est réglable pendant le processus de fabrication du capteur de véhicule (4) pour permettre une détection sélective de l'accélération et/ou du bruit de structure.

10. Dispositif selon une des revendications précédentes, **caractérisé en ce que** l'unité de traitement (4.2) est constituée pour détecter des signaux d'enregistreur de valeurs de mesure ayant une amplitude élevée sans surmodulation d'un circuit amplificateur disposé dans l'unité de traitement (4.2).

11. Dispositif selon une des revendications précédentes, **caractérisé en ce que** l'enregistreur de valeurs de mesure (4.1), au moins au nombre de un, est un enregistreur piézo-électrique, une jauge extensométrique, un enregistreur micromécanique ou un enregistreur magnétorestrictif.

12. Procédé de déclenchement d'un système de sécurité dans un véhicule avec au moins deux capteurs de véhicule (4) qui peuvent détecter des vibrations dans des plages de fréquence qui sont provoquées aussi bien par une accélération que par le bruit de structure, et englobent chacun au moins un enregistreur de valeurs de mesure (4.1) pour la détection de vibrations, et avec une unité centrale (2) qui analyse des signaux de capteur des capteurs de véhicule et qui déclenche en fonction de cela le système de sécurité, **caractérisé en ce que** les capteurs de véhicule présentent chacun
a) une première direction de sensibilité (7.1) de l'enregistreur de valeurs de mesure (4.1), au moins au nombre de un, pour la détection de l'accélération et
b) une deuxième direction de sensibilité (7.2) de l'enregistreur de valeurs de mesure (4.1), au moins au nombre de un, pour la détection du bruit de structure,
c) la première direction de sensibilité (7.1) et la deuxième direction de sensibilité (7.2) du capteur de véhicule (4) respectif sont orientées l'une par rapport à l'autre selon un angle d'environ 90 degrés,
d) les capteurs de véhicule étant disposés l'un par rapport à l'autre de sorte que la première direction de sensibilité (7.1) du premier capteur de véhicule et la deuxième direction de sensibilité (7.2) du deuxième capteur de véhicule, et la deuxième direction de sensibilité (7.1) du premier capteur de véhicule et la première direction de sensibilité (7.2) du deuxième capteur de véhicule sont à peu près identiques.

13. Procédé selon la revendication 12, **caractérisé en ce qu'**une plausibilité de signal d'une partie de signal de l'accélération et/ou du bruit de structure du premier capteur de véhicule (4) est effectuée avec une partie de signal de l'accélération et/ou du bruit de structure d'au moins le deuxième capteur de véhicule (4).

14. Procédé selon la revendication 13, **caractérisé en ce qu'**un signal de déclenchement déterminé à partir de l'accélération du premier capteur de véhicule est relié à un signal de plausibilité déterminé à partir du bruit de structure du deuxième capteur de véhicule et
un signal de déclenchement déterminé à partir de l'accélération du deuxième capteur de véhicule est relié à un signal de plausibilité déterminé à partir du bruit de structure du premier capteur de véhicule.
